# EUROPÄISCHE PATENTANMELDUNG

(11) **EP 4 733 715 A1**
(43) Veröffentlichungstag der Anmeldung: **29.04.2026**
(21) Anmeldenummer: 24208454.9
(22) Anmeldetag: 23.10.2024
(51) Int. Cl.: G01B 11/24

(54) **OPTISCHES MESSEN MIT ACHSBEWEGUNGEN**

(71) Anmelder: Klingelnberg GmbH, 42499 Hückeswagen (DE)
(72) Erfinder: Merkert, Benjamin, 51688 Wipperfürth (DE)
(74) Vertreter: Janke Scholl Patentanwälte PartG mbB

(57) **Zusammenfassung**

Verfahren, mit den Verfahrensschritten: Optisches Messen einer Verzahnungsgeometrie einer Verzahnung (14) mittels einer optischen Messvorrichtung einer Koordinatenmessmaschine (2), wobei Messpunkte (MP) mit Koordinatenmesswerten (x, y, z) erfasst werden, wobei während des Erfassens der Messpunkte (MP) eine Relativbewegung der optischen Messvorrichtung (8) zur zu messenden Verzahnung (14) ausgeführt wird und wobei die Relativbewegung eine Oszillation aufweist und/oder eine Geschwindigkeit der Relativbewegung bis zu 100 mm/s beträgt und/oder eine Beschleunigung der Relativbewegung bis zu 300 mm/s² beträgt.

## Beschreibung

Die vorliegende Erfindung betrifft ein Verfahren zum optischen Messen einer Verzahnungsgeometrie einer Verzahnung mittels einer optischen Messvorrichtung einer Koordinatenmessmaschine, wobei Messpunkte mit Koordinatenmesswerten erfasst werden, wobei während des Erfassens der Messpunkte eine Relativbewegung der optischen Messvorrichtung zur zu messenden Verzahnung ausgeführt wird. Weiter betrifft die Erfindung eine Koordinatenmessmaschine zur Verzahnungsmessung.

Optische Messvorrichtungen ermöglichen in der Verzahnungsmessung reduzierte Messzeiten, da im Vergleich zu taktilen Messsystemen während des Messens die zeitintensiven Verfahr- und Zustellbewegungen des Messtasters entfallen. Denn ein Messtaster kann systembedingt nur diejenige Position erfassen und als Messpunkt aufnehmen, die tatsächlich im physischen Kontakt mit einer zu messenden Zahnflanke einer Verzahnung angefahren worden ist. Demgegenüber können optische Messsysteme Messwerte mit einem Abstand zur zu messenden Verzahnung erfassen, während die zu messende Verzahnung beispielsweise vor der stillstehenden optischen Messvorrichtung rotiert wird.

Das optische Messen mit einem Abstand zur zu messenden Verzahnung hat den Nachteil, dass die Geometrie klassischer Verzahnungen, insbesondere deren Zahnform, wie z.B. von Stirnrädern oder Kegelradverzahnungen, sehr ungünstige Bedingungen für die optische Messung darstellen. So kann es insbesondere im Zahnfußbereich zu Abschattungen kommen, welche die Qualität der optischen Messung beeinträchtigen. Weiter ergeben sich für verschiedene Messpunkte entlang einer zu messenden Zahnflanke unterschiedliche Winkel einer optischen Achse des Messsystems zur zu messenden Oberfläche, so dass sich die geometrischen Bedingungen der optischen Abbildung entlang einer Zahnflanke ändern und sich ungünstige Winkel für die optische Messung ergeben.

Vor diesem Hintergrund liegt der vorliegenden Erfindung die technische Problemstellung zugrunde, ein Verfahren zum optischen Messen einer Verzahnungsgeometrie einer Verzahnung der eingangs genannten Art anzugeben, welches eine verbesserte optische Messung ermöglicht. Weiter soll eine Koordinatenmessmaschine zur Ausführung eines solchen Verfahrens angegeben werden.

Gemäß einem ersten Aspekt betrifft die Erfindung ein Verfahren, mit den Verfahrensschritten: Optisches Messen einer Verzahnungsgeometrie einer Verzahnung mittels einer optischen Messvorrichtung einer Koordinatenmessmaschine, wobei Messpunkte mit Koordinatenmesswerten erfasst werden, wobei während des Erfassens der Messpunkte eine Relativbewegung der optischen Messvorrichtung zur zu messenden Verzahnung ausgeführt wird. Das Verfahren zeichnet sich dadurch aus, dass die Relativbewegung eine Oszillation aufweist und/oder eine Geschwindigkeit der Relativbewegung bis zu 100 mm/s beträgt und/oder eine Beschleunigung der Relativbewegung bis zu 300 mm/s² beträgt.

Durch das schnelle und/oder oszillierende Bewegen der optischen Messvorrichtung kann eine effizientere optische Messung erreicht werden.

Insbesondere können Abschattungen vermieden, Oberflächenstrukturen erfasst und Bauteilgrenzen bzw. die makroskopischen Abmaße des die Verzahnung aufweisenden Bauteils ermittelt werden. Weiter können Lücken in erfassten Punktwolken der Koordinatenmesswerte, die ohne eine schnelle und/oder oszillierende Relativbewegung der optischen Messvorrichtung entstehen würden, geschlossen werden.

Das Messen der Verzahnungsgeometrie kann eine Auswertung der Koordinatenmesswerte aufweisen, z.B. das Bestimmen von Verzahnungsparametern, wie z.B. Profilform, Flankenform, Zähnezahl, Außendurchmesser, Zahnteilung, Lückweite, Modul, Schrägungswinkel, Spiralwinkel, Kopfkegel, Fußkegel, Kopfrücknahme, Fußrücknahme, Endenrücknahme, Profilballigkeit, Breitenballigkeit oder dergleichen.

Die Relativbewegung kann eine Oszillation aufweisen. Die Oszillation ermöglicht insbesondere z.B. ein Scannen von Oberflächenbereichen, um Oberflächenstrukturen wie Welligkeiten oder Rauheiten zu erfassen.

Alternativ oder ergänzend ermöglicht die Oszillation eine Anpassung der optischen Messung an die jeweilige Messaufgabe, um das Messergebnis zu verbessern und den Bereich der mit der Messung abgedeckten Oberfläche einer jeweiligen Zahnflanke insgesamt zu vergrößern.

Die Oszillation kann eine Frequenz von größer oder gleich 0,5 Hz und kleiner oder gleich 10 Hz aufweisen.

Die Oszillation kann eine Frequenz von größer oder gleich 1 Hz und kleiner oder gleich 5 Hz aufweisen.

Die Oszillation ist insbesondere eine gesteuerte Bewegung, die mittels gesteuerter Achsantriebe der Koordinatenmessmaschine ausgeführt wird. Die Oszillation wird insbesondere nicht durch einen zu den Achsantrieben separaten Schwingungsanreger oder Schwingungsaktuator erzeugt.

Die Oszillation ist insbesondere Teil einer CNC-gesteuerten Bewegung bzw. einer CNC-Achskinematik als Teil eines Messablaufs der zu messenden Verzahnung.

Die Oszillation kann eine Amplitude von größer oder gleich 1 mm und kleiner oder gleich 50 mm aufweisen.

Die Oszillation kann eine Amplitude von größer oder gleich 2 mm und kleiner oder gleich 30 mm aufweisen.

Alle voranstehend genannten Zahlenwerte sind beispielhaft zu verstehen und können in Abhängigkeit von der Messaufgabe bzw. der Geometrie der zu messenden Verzahnung gemäß alternativer Ausgestaltungen auch außerhalb der genannten Bereiche gewählt werden.

Es kann vorgesehen sein, dass eine Frequenz und/oder eine Amplitude der Oszillation für einen vorgegebenen Messablauf der Verzahnung für aufeinanderfolgend zu messende Zähne konstant gehalten werden. D.h. zu messende Zähne einer Verzahnung können mit derselben Frequenz und/oder Amplitude der Relativbewegung optisch abtastet werden.

Die Oszillation kann an eine Geometrie der Verzahnung angepasst sein. Beispielsweise kann eine Oszillation in Zahnhöhenrichtung erfolgen, so dass die optische Messvorrichtung den Bergen und Tälern des Zahnprofils, d.h. dem durch die Zähne und Lücken vorgegebenen Profil der Verzahnung, folgt. Beispielsweise kann eine Oszillation alternativ oder ergänzend in Zahndickenrichtung und/oder in Zahnbreitenrichtung erfolgen.

Die optische Messvorrichtung kann einen optischen Abstandssensor aufweisen, insbesondere einen konfokal chromatischen Abstandssensor aufweisen.

Der optische Abstandssensor kann ein Punktsensor zur optischen Abstandsmessung sein.

Insbesondere können durch den Punktsensor einzelne Messpunkte nacheinander gemessen werden. Jeder einzelne Messpunkt kann unabhängig und separat von weiteren Messpunkten mittels des Punktsensors erfassbar sein. D.h. mittels des Punktsensors kann es insbesondere möglich sein, einen einzelnen Messpunkt zu erfassen, ohne gleichzeitig weitere Messpunkte zu erfassen. Jedem einzelnen Messpunkt können drei Raumkoordinaten, d.h. Koordinatenmesswerte, zugeordnet sein, und zwar z.B. ein x-Wert, ein y-Wert und ein z-Wert in einem kartesischen Koordinatensystem x-y-z.

Es kann vorgesehen sein, dass ein Fokusdurchmesser des optischen Abstandssensors 50 Mikrometer oder weniger beträgt, insbesondere 20 Mikrometer oder weniger beträgt.

Es kann vorgesehen sein, dass der Punktsensor zur optischen Abstandsmessung eine Tiefenauflösung aufweist.

Beispielsweise kann, entlang einer optischen Achse des Punktsensors betrachtet, in einem Tiefenmessbereich entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Es kann vorgehen sein, dass die Abstandsmessung eindimensional entlang einer optischen Achse erfolgt und dreidimensionale Messwerte anhand der Position des optischen Messsystems errechnet werden.

Beispielsweise kann, entlang einer optischen Achse des Punktsensors betrachtet, in einem Tiefenmessbereich von wenigen Zentimetern oder wenigen Millimetern oder in einem Tiefenmessbereich von weniger als einem Millimeter entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Anhand der Abstandsinformation des Punktsensors kann insbesondere ein dreidimensionaler Messpunkt erzeugt werden, wobei Informationen zu Achspositionen der Koordinatenmessmaschine berücksichtigt werden können, die den optischen Punktsensor trägt. Es kann vorgehen sein, dass die Abstandsmessung eindimensional entlang einer optischen Achse erfolgt und dreidimensionale Messwerte anhand der Position des optischen Abstandssensors errechnet werden.

Es kann vorgesehen sein, dass die Koordinatenmessmaschine zwei oder mehr Punktsensoren zur optischen Abstandsmessung aufweist.

Es kann vorgesehen sein, dass Punktsensoren entlang einer Linie aufgereiht oder gitterartig verteilt in Zeilen und Spalten angeordnet sind. Jeder der Punktsensoren ist daher insbesondere in voranstehend beschriebener Weise zur optischen Abstandsmessung eingerichtet und weist insbesondere einen Tiefenmessbereich mit einer Tiefenauflösung entlang einer optischen Achse auf. Die Punktsensoren können gleichzeitig Messwerte erfassen.

Die Koordinatenmessmaschine weist insbesondere keine Kamera zur optischen Messung einer Werkstückgeometrie auf. Die Koordinatenmessmaschine weist insbesondere keine Kamera zur zweidimensionalen Bildgebung auf.

Es kann vorgesehen sein, dass insbesondere keine Kamera zur Erfassung von Messpunkten durch Bild- oder Pixelanalyse vorgesehen ist. Es kann insbesondere vorgehen sein, dass keine Kamera zur zweidimensionalen Bildgebung zur Erfassung von Messpunkten durch Bild- oder Pixelanalyse vorgesehen ist.

Die Oszillation kann an einen Messbereich des optischen Abstandssensors angepasst sein. Soweit z.B. eine Zahnhöhe eines jeweiligen Zahns der Verzahnung einen zur Verfügung stehenden Tiefenmessbereich des optischen Abstandssensors übersteigt, kann eine Oszillation des optischen Abstandssensors in Zahnhöhenrichtung erfolgen, während die Verzahnung um ihre Rotationsachse rotiert wird. Die Oszillation kann insbesondere derart mit der Rotation der Verzahnung gekoppelt sein, dass die Frequenz der Oszillation des optischen Abstandssensors der Drehzahl der Verzahnung multipliziert mit der Zähnezahl entspricht.

Gemäß einer Ausgestaltung des Verfahrens kann vorgesehen sein, dass eine Geschwindigkeit der Relativbewegung zumindest zeitweise größer ist als 10 mm/s, insbesondere zumindest zeitweise größer ist als 20 mm/s, weiter insbesondere zumindest zeitweise größer ist als 50 mm/s.

Gemäß einer Ausgestaltung des Verfahrens kann vorgesehen sein, dass eine Beschleunigung der Relativbewegung zumindest zeitweise größer ist als 10 mm/s², insbesondere zumindest zeitweise größer ist als 50 mm/s², weiter insbesondere zumindest zeitweise größer ist als 100 mm/s².

Die Bestimmung der Koordinatenmesswerte kann unter Berücksichtigung der Geschwindigkeit der Relativbewegung erfolgen. Insbesondere schnelle Relativbewegungen können dazu führen, dass Messergebnisse verfälscht werden. So kann eine softwarebasierte Kompensation vorgesehen sein, die aus der Relativbewegung der optischen Messeinrichtung resultierende Messabweichungen ausgleicht bzw. kompensiert.

Es kann vorgesehen sein, dass zumindest ein Bewegungsanteil der Relativbewegung in einer Richtung senkrecht oder geneigt zu einer Rotationsachse der Verzahnung orientiert ist.

Alternativ oder ergänzend kann vorgesehen sein, dass zumindest ein Bewegungsanteil der Relativbewegung in einer Richtung parallel zur Rotationsachse der Verzahnung orientiert ist.

Die Relativbewegung kann eine überlagerte Bewegung mit Bewegungsanteilen in mindestens zwei zueinander orthogonalen Raumrichtungen sein.

Wenn vorliegend von einer Relativbewegung gesprochen wird, so handelt es sich immer um eine Bewegung der optischen Messvorrichtung. Die optische Messvorrichtung kann hierzu von gesteuerten Maschinenachsen der Koordinatenmessmaschine getragen und in mindestens zwei Raumrichtungen, insbesondere in drei Raumrichtungen bewegbar sein.

Insbesondere kann die optische Messvorrichtung mittels gesteuerter Maschinenachsen in drei zueinander orthogonalen Raumrichtungen translatorisch bewegbar sein, wobei die Bewegungen einander überlagert werden können. Insbesondere kann die optische Messvorrichtung mittels gesteuerter Maschinenachsen um eine, zwei oder drei Achsen schwenkbar sein.

Es kann vorgesehen sein, dass die Verzahnung während der Messung relativ zu der optischen Messvorrichtung bewegt wird, wobei diese Bewegung der Verzahnung vorliegend als Zusatzbewegung bezeichnet wird.

Beispielsweise kann die Verzahnung während der Messung um eine Rotationsachse rotiert werden. Die Verzahnung kann hierzu z.B. auf einer Drehachse oder einem Drehtisch der Koordinatenmessmaschine gehalten sein.

Gemäß einer Ausgestaltung des Verfahrens kann vorgesehen sein, dass die Verzahnung während des Erfassens der Messpunkte mit einer konstanten Rotationsgeschwindigkeit um die Rotationsachse rotiert wird.

Es kann vorgesehen sein, dass eine rotatorische Zusatzbewegung der Verzahnung, d.h. eine Drehzahl der Verzahnung während des Erfassens der Messpunkte, mit der Relativbewegung der optischen Messvorrichtung während des Erfassens der Messpunkte gekoppelt ist. Insbesondere kann vorgesehen sein, dass eine Oszillation der optischen Messvorrichtung in einem vorgegebenen Verhältnis zur Zähnezahl und zur Drehzahl der zu messenden Verzahnung eingestellt ist.

Gemäß einem zweiten Aspekt betrifft die Erfindung eine Koordinatenmessmaschine zur Verzahnungsmessung, mit gesteuerten Maschinenachsen zum Ausführen von Messbewegungen, mit einer optischen Messvorrichtung zum Erfassen von Koordinatenmesswerten, wobei die optische Messvorrichtung mittels der Maschinenachsen relativ zu einer zu messenden Verzahnung bewegbar ist, wobei die Koordinatenmessmaschine zur Ausführung des erfindungsgemäßen Verfahrens eingerichtet ist.

Nachfolgend wird die Erfindung anhand einer Ausführungsbeispiele darstellenden Zeichnung näher erläutert. Es zeigen jeweils schematisch:
- Fig. 1: eine erfindungsgemäße Koordinatenmessmaschine;
- Fig. 2: eine zu messende Verzahnung;
- Fig. 3: eine optische Messung;
- Fig. 4: eine weitere optische Messung;
- Fig. 5: Bewegungsprofile der Maschinenachsen;
- Fig. 6: Verfahrensschritte eines erfindungsgemäßen Verfahrens.

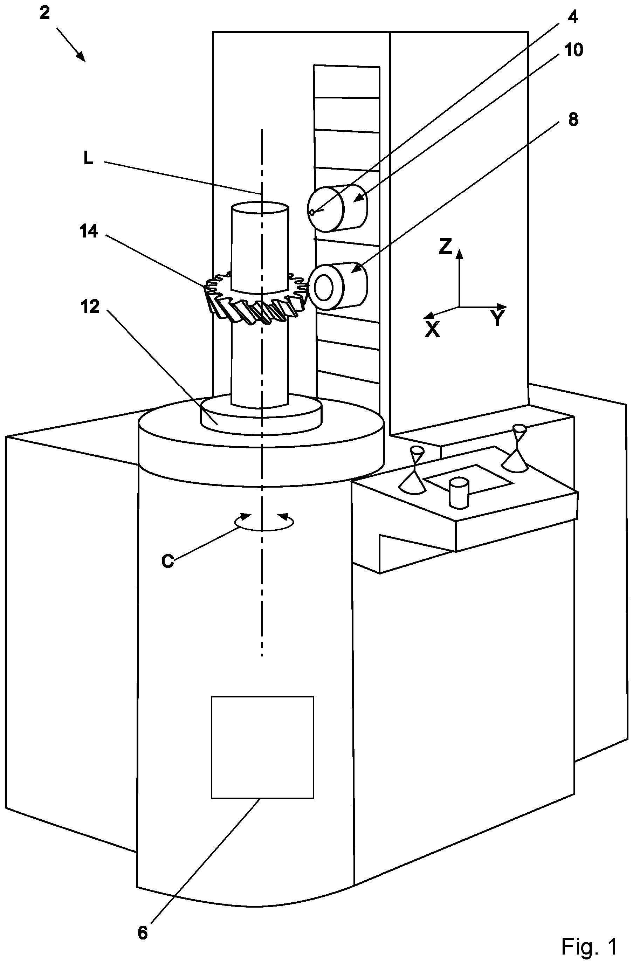

Fig. 1 zeigt eine erfindungsgemäße Koordinatenmessmaschine 2 zur Verzahnungsmessung. Die Koordinatenmessmaschine 2 hat in bekannter Weise gesteuerte, angetriebene Maschinenachsen zum Ausführen von überlagerten Messbewegungen entlang der kartesischen Koordinatenachsen X, Y, Z sowie um die Drehachse C. Die Koordinatenmessmaschine 2 hat demnach drei translatorische Freiheitsgrade und einen rotatorischen Freiheitsgrad, um eine Relativbewegung während einer Messung zu realisieren.

Die Bezugszeichen X, Y, Z, und C können daher exemplarisch und schematisch neben den genannten Freiheitsgraden gleichzeitig als Bezugszeichen zur Bezeichnung dreier CNC-gesteuerter Linearachsen X, Y, Z und einer CNC-gesteuerten Rotationsachse C angesehen werden, d.h. zur Bezeichnung der CNC-gesteuerten Maschinenachsen, die z.B. drei gesteuerte, angetriebene Linearachsen und eine gesteuerte, angetriebene Drehachse sein können.

Die Koordinatenmessmaschine 2 hat eine Steuer- und Auswerteinrichtung 6 zur Ausführung von Messabläufen und zum Auswerten von Messdaten.

Die Koordinatenmessmaschine 2 hat eine optische Messvorrichtung 8 zum optischen Erfassen von Koordinatenmesswerten. Die Koordinatenmessmaschine 2 hat zudem eine taktile Messvorrichtung 10 mit einem Messtaster 4.

Ein Drehtisch 12 dient zur Aufnahme einer zu messenden Verzahnung 14.

Die optische Messvorrichtung 8 ist mittels der Maschinenachsen X, Y, Z translatorisch in drei Raumrichtungen X, Y, Z relativ zur zu messenden Verzahnung 14 bewegbar. Die zu messende Verzahnung 14 ist mittels der Drehachse C um ihre Längsachse L relativ zur optischen Messvorrichtung 8 rotierbar.

Die optische Messvorrichtung 8 ist ein konfokal chromatischer Abstandssensor.

Die Koordinatenmessmaschine 2 ist zur Ausführung eines nachfolgend beschriebenen erfindungsgemäßen Verfahrens eingerichtet.

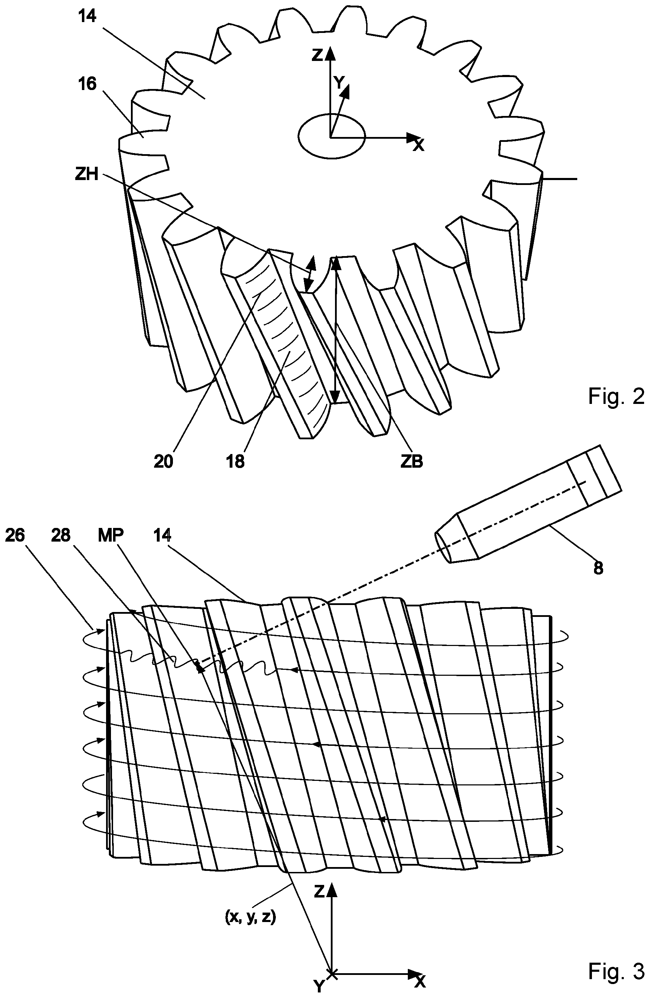

Fig. 2 zeigt exemplarisch und schematisch ein außenschrägverzahntes Stirnrad 14. Es sollen in bekannter Weise z.B. Profillinien 20 an Zahnflanken 18 der Zähne 16 der Verzahnung 14 erfasst werden. Es sollen an jeder Zahnflanke 18 Messwerte sowohl in Richtung der Zahnhöhe ZH als auch der Zahnbreite ZB erfasst werden.

Hierzu kann vorgesehen sein, dass das Zahnrad 14 während der Messung um die C-Achse rotiert wird und die optische Messvorrichtung 8 währenddessen in Z-Richtung bewegt wird. Aus dieser überlagerten Bewegung ergibt sich eine Messspirale 26, wie in Fig. 3 angedeutet. Zusätzlich kann die Relativbewegung der optischen Messvorrichtung 8 eine Oszillation in X-Richtung und/oder in Y-Richtung aufweisen, so dass der Messpirale eine oszillierende Relativbewegung 28 der optischen Messvorrichtung 8 überlagert wird.

Die oszillierende Relativbewegung 28 kann abschnittsweise erfolgen, wie in Fig. 3 angedeutet oder kann entlang der gesamten Messspirale 26 überlagert werden.

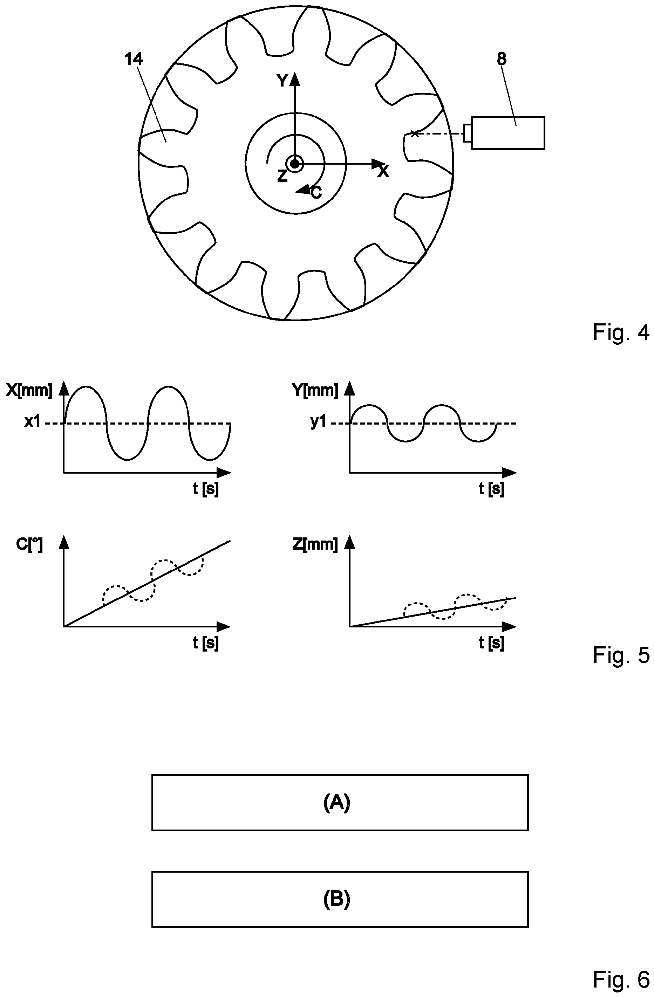

Zur besseren Nachvollziehbarkeit der voranstehenden Ausführungen zeigen Fig. 4 und Fig. 5 die Freiheitsgrade X, Y, Z, und C und die zugeordnete Relativbewegung der optischen Messvorrichtung 8 je Achse X, Y, Z aufgetragen über der Zeit t sowie die rotatorische Zusatzbewegung C der Verzahnung 14 aufgetragen über der Zeit. Die dargestellten Verläufe sind jeweils schematisch zu verstehen.

Wie in Fig. 5 zu erkennen, oszilliert die optische Messvorrichtung in X-Richtung um eine Position x1 und in Y-Richtung um eine Position y1. Es kann auch nur eine reine Oszillation in X-Richtung stattfinden, ohne eine Oszillation in Y-Richtung - oder umgekehrt.

Die Z-Achse und die C-Achse werden jeweils mit konstanter Geschwindigkeit verfahren.

Gemäß alternativer Ausgestaltungen kann vorgesehen sein, dass eine Oszillation in Z-Richtung und/oder um die C-Achse stattfindet. So kann z.B. der gezeigten konstanten Vorschubbewegung in Z-Richtung eine Oszillation in Z-Richtung überlagert sein oder es kann der konstanten Drehung um die C-Achse eine Oszillation um die C-Achse überlagert sein. Dies ist schematisch durch die gestrichelten Linien in den Diagrammen für Z und C angedeutet.

Die Oszillation kann derart angepasst sein, dass z.B. die Oszillation in X-Richtung dem Zahnprofil der Verzahnung entsprechend nachgeführt wird, d.h. der Abstand der optischen Messvorrichtung zur Rotationsachse der Verzahnung 14 zum Messen im Fußbereich eines jeweiligen Zahns 16 verringert wird und zum Messen im Kopfbereich eines jeweiligen Zahns 16 vergrößert wird.

So kann ein Verlauf der Oszillation in X-Richtung z.B. für eine Zykloidenverzahnung das Zahnprofil dieser Zykloidenverzahnung nachbilden, ggf. ein gestauchtes oder gestrecktes Zahnprofil dieser Zykloidenverzahnung nachbilden. Dies gilt gleichermaßen für Evolventenverzahnungen oder andere Profilformen.

Insgesamt kann daher ein Verfahren angegeben werden, aufweisend die Verfahrensschritte: (A) Optisches Messen der Verzahnungsgeometrie der Verzahnung 14 mittels der optischen Messvorrichtung 8 der Koordinatenmessmaschine 2, wobei Messpunkte MP mit Koordinatenmesswerten x, y, z erfasst werden; (B) wobei während des Erfassens der Messpunkte MP eine Relativbewegung der optischen Messvorrichtung 8 zur zu messenden Verzahnung 14 ausgeführt wird.

### BEZUGSZEICHEN

- 2: Koordinatenmessmaschine
- 4: Messtaster
- 6: Steuer- und Auswerteinrichtung
- 8: optische Messvorrichtung
- 10: taktile Messvorrichtung
- 12: Drehtisch
- 14: außenschrägverzahntes Stirnrad / Verzahnung
- 16: Zähne
- 18: Zahnflanke
- 20: Profillinie
- 26: Messspirale
- 28: oszillierende Relativbewegung
- X: Linearachse / translatorischer Freiheitsgrad
- Y: Linearachse / translatorischer Freiheitsgrad
- Z: Linearachse / translatorischer Freiheitsgrad
- C: Drehachse / rotatorischer Freiheitsgrad
- L: Längsachse / Rotationsachse
- ZB: Zahnbreite
- ZH: Zahnhöhe
- MP: Messpunkt
- x: Koordinatenmesswert des Messpunkts MP
- y: Koordinatenmesswert des Messpunkts MP
- z: Koordinatenmesswert des Messpunkts MP

## Patentansprüche

1. Verfahren, mit den Verfahrensschritten:
Optisches Messen einer Verzahnungsgeometrie einer Verzahnung (14) mittels einer optischen Messvorrichtung (8) einer Koordinatenmessmaschine (2), wobei Messpunkte (MP) mit Koordinatenmesswerten (x, y, z) erfasst werden, wobei während des Erfassens der Messpunkte (MP) eine Relativbewegung der optischen Messvorrichtung (8) zur zu messenden Verzahnung (14) ausgeführt wird, **dadurch gekennzeichnet, dass** die Relativbewegung eine Oszillation (28) aufweist und/oder eine Geschwindigkeit der Relativbewegung bis zu 100 mm/s beträgt und/oder eine Beschleunigung der Relativbewegung bis zu 300 mm/s² beträgt.

2. Verfahren nach Anspruch 1,
**dadurch gekennzeichnet, dass**
die Oszillation (28) eine Frequenz von größer oder gleich 0,5 Hz und kleiner oder gleich 10 Hz aufweist, insbesondere eine Frequenz von größer oder gleich 1 Hz und kleiner oder gleich 5 Hz aufweist
und/oder
die Oszillation (28) eine Amplitude von größer oder gleich 1 mm und kleiner oder gleich 50 mm aufweist, insbesondere eine Amplitude von größer oder gleich 2 mm und kleiner oder gleich 30 mm aufweist.

3. Verfahren nach einem der Ansprüche 1 oder 2,
**dadurch gekennzeichnet, dass**
die Oszillation (28) an eine Geometrie der Verzahnung (14) angepasst ist.

4. Verfahren nach einem der voranstehenden Ansprüche,
**dadurch gekennzeichnet, dass**
die optische Messvorrichtung (8) einen Abstandssensor aufweist, insbesondere einen konfokal chromatischen Abstandssensor aufweist.

5. Verfahren nach Anspruch 5 und nach einem der Ansprüche 1 bis 4,
**dadurch gekennzeichnet, dass**
die Oszillation (28) an einen Messbereich des Abstandssensors (8) angepasst ist.

6. Verfahren nach einem der voranstehenden Ansprüche,
**dadurch gekennzeichnet, dass**
eine Geschwindigkeit der Relativbewegung während des Erfassens der Messpunkte (MP) zumindest zeitweise größer ist als 10 mm/s, insbesondere zumindest zeitweise größer ist als 20 mm/s, weiter insbesondere zumindest zeitweise größer ist als 50 mm/s
und/oder
eine Beschleunigung der Relativbewegung während des Erfassens der Messpunkte (MP) zumindest zeitweise größer ist als 10 mm/s², insbesondere zumindest zeitweise größer ist als 50 mm/s², weiter insbesondere zumindest zeitweise größer ist als 100 mm/s².

7. Verfahren nach Anspruch 6,
**dadurch gekennzeichnet, dass**
die Bestimmung der Koordinatenmesswerte (x, y, z) unter Berücksichtigung der Geschwindigkeit und/oder Beschleunigung der Relativbewegung erfolgt.

8. Verfahren nach einem der voranstehenden Ansprüche,
**dadurch gekennzeichnet, dass**
ein Bewegungsanteil der Relativbewegung in einer Richtung senkrecht oder geneigt zu einer Rotationsachse (L) der Verzahnung (14) orientiert ist.

9. Koordinatenmessmaschine zur Verzahnungsmessung,
- mit gesteuerten Maschinenachsen (X, Y, Z, C) zum Ausführen von Messbewegungen,
- mit einer optischen Messvorrichtung (8) zum Erfassen von Koordinatenmesswerten (x, y, z),
- wobei die optische Messvorrichtung (8) mittels der Maschinenachsen (X, Y, Z, C) relativ zu einer zu messenden Verzahnung (14) bewegbar ist,
- wobei die Koordinatenmessmaschine (2) zur Ausführung des Verfahrens gemäß einem der voranstehenden Ansprüche eingerichtet ist.
